# EUROPEAN PATENT APPLICATION

(11) **EP 1 890 299 A1**
(43) Date of publication of application: **20.02.2008**
(21) Application number: 06119067.4
(22) Date of filing: 17.08.2006
(51) Int. Cl.: G21K 4/00, C09K 11/85

(54) **Method of manufacturing a radiation image storage panel**

(71) Applicant: Agfa HealthCare NV, 2640 Mortsel (BE)
(72) Inventor: Tahon, Jean-Pierre AGFA-GEVAERT, 2640 Mortsel (BE)
(74) Representative: Theunis, Patrick

(57) **Abstract**

In a method of manufacturing a radiation image storage phosphor layer on a support layer, wherein said method comprises a vapor depositing step of raw materials of an alkali metal halide salt and a lanthanide dopant salt or a combination thereof in order to ensure vapor deposition of a binderless storage phosphor layer from one or more resistance-heated crucible(s) in a vapor deposition apparatus, wherein one or more shutter(s) are positioned between said crucible(s) and said support, at the time said vapor depositing step starts while opening said shutter(s), a start temperature is measured on and registered by means of a thermocouple, positioned close to the support at the side of said support where vapour becomes deposited in order to form said binderless storage phosphor layer, of less than 300°C, but not less than 100°C.

## Description

### FIELD OF THE INVENTION

The present invention is related with a method to prepare a radiation image storage panel provided with a binderless vapour deposited storage phosphor layer.

### BACKGROUND OF THE INVENTION

A well-known use of phosphors is in the production of X-ray images. In a conventional radiographic system an X-ray radiograph is obtained by X-rays transmitted image-wise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

According to another method of recording and reproducing an X-ray pattern as disclosed e.g. in US-A 3,859,527 a special type of phosphor is used, known as a photostimulable phosphor, which being incorporated in a panel, is exposed to an incident pattern-wise modulated X-ray beam and as a result thereof temporarily stores energy contained in the X-ray radiation pattern. At some interval after exposure, a beam of visible or infra-red light scans the panel to stimulate the release of stored energy as light that is detected and converted to sequential electrical signals which can be processed to produce a visible image. For this purpose, the phosphor should store as much as possible of the incident X-ray energy and emit as little as possible of the stored energy until stimulated by the scanning beam. This imaging technique is called "digital radiography" or "computed radiography".

CsBr doped with divalent Eu is a promising X-ray storage phosphor which can be grown in form of needle-shaped crystals. In basic patent US-A 6,802,991 a method is offered for producing such a phosphor by vapor deposition in a vapor deposition apparatus by heating a mixture of CsBr with an Europium compound selected from the group consisting of e.g. EuBr₂, EuBr₃ and EuOBr, by heating said mixture at a temperature above 450°C, and depositing said phosphor on a substrate by a method selected from the group consisting of physical vapor deposition, chemical vapor deposition or an atomization technique. In US-A 6,730,243 a method for preparing a CsBr:Eu phosphor comprises the steps of mixing or combining CsBr with between 10⁻³ mol % and 5 mol % of a europium compound wherein said europium compound is a member selected from the group consisting of EuBr₂, EuBr₃ and EuOBr, vapor depositing that mixture onto a substrate, forming a binderless phosphor screen, cooling said phosphor screen to room temperature, bringing said phosphor screen to a temperature between 80 and 220°C and maintaining it at that temperature for between 10 minutes and 15 hours, i.e. an annealing step is added in order to further correct phosphor speed. As taught in EP-A 1 443 525 further corrections can be made by a radiation exposure treatment during or after at least one of the preparation steps with energy from radiation sources emitting short ultraviolet radiation in the range from 150 nm to 300 nm with an energy of at least 10 mJ/mm².

Correction of speed, in order to optimize speed increase, is further offered, as taught in US-A 6,852,357 by depositing on the support a prismatic europium activated cesium bromide phosphor crystal layer on the support in a gas phase; and heating the crystal layer at a temperature of lower than 300°C but not lower than 50°C for a period of 1 to 8 hours in an inert gas atmosphere or an inert gas atmosphere containing a small amount of oxygen or hydrogen. In US-A 2005/040340 an annealing step, called heat treatment, is performed at a temperature of from 80°C to 300°C.

In US-A 2006/013966 an evaporation method by electric resistance heating of a crucible has been described, wherein said crucible is filled with raw materials up to at most 80 % of its total volume, determined by its inner surface of its bottom and height of its inner side walls and wherein electric heating proceeds up to a temperature exceeding the melting temperature of said raw materials with at least 10°C.

In US-Applications 2001/0007352 and 2003/0091729 in a method for producing a binderless storage phosphor screen, said method comprises the steps of providing an alkali metal storage phosphor, vacuum depositing said phosphor on a substrate characterised in that during said step of vacuum depositing said substrate is kept at a temperature T, such that 50 °C ≤ T ≤ 300 °C and said vacuum deposition proceeds in an Ar-atmosphere with an Ar-pressure of at most 3 Pa.

US-A 2004/081750 teaches a method of preparing a phosphor screen having at least a substrate and a phosphor layer comprising a CsX:Eu²⁺ phosphor wherein X represents a halide selected from a group consisting of Br and Cl, wherein said phosphor is deposited by physical vapour deposition on said substrate characterised in that during deposition said substrate is at a temperature in the range of 135 °C to 235 °C and wherein a variation of the temperature of the substrate occurring during said deposition process is not more than 50 °C.

As has been set forth in US-A 2004/146639 well aligned crystalline conditions of the europium-activated cesium halide phosphor crystals in the stimulable phosphor layer formed on the substrate by gas phase deposition can be attained with high reliability by controlling a relationship between the temperature of the substrate and a molar ratio of europium to cesium (Eu/Cs) in the deposited stimulable phosphor in order to satisfy the specific conditions. Therein it is recommended that the vapor deposition is performed under the condition that the support is heated at a temperature of 50°C to 300°C, and more preferably at a temperature of 100°C to 290°C.

In US-A 2005/0133731 it is repeated that the temperature of the substrate generally is kept in the range of 20°C to 350°C, preferably in the range of 100°C to 300°C. The deposition rate, which means how fast the formed phosphor is deposited and accumulated on the substrate, is said to be controlled by adjusting the electric currents supplied to the heaters and the deposition rate generally is in the range of 0.1 to 1,000 µm/min., preferably in the range of 1 to 100 µm/min.. A substrate kept in the range of 100°C to 300°C is also proposed in US-P 6,835,940, wherein in a stimulable phosphor layer comprising columnar stimulable phosphor crystals, the columnar crystals have a tip exhibiting an average angle of 20° to 80° which a centerline in the direction of crystal growth makes with a line tangent to a section of the tip having the centerline. Besides temperature support it is taught therein that the degree of vacuum, crystal growth speed and kind of stimulable phosphor are decisive in order to optimize crystal growth conditions. Whereas lower support temperatures tend to render the crystals thinner, excessively low temperatures make it difficult to maintain the columnar form. So the temperature of a support is preferably 100°C to 300°C, and more preferably 150°C to 270°C, the incident angle of the vapor stream is preferably 0° to 5°, and the degree of vacuum is preferably not more than 0.13 Pa.

In US-A 2003/0209675 during vacuum evaporation of CsBr, primary activator Eu is introduced in the following manner. For example, when vacuum evaporation is carried out using a phosphor raw material comprised of a mixture of CsBr and EuBr₂, a vacuum-evaporated layer is formed while heating the phosphor raw material at a temperature which is at least 20°C higher than the melting point (705°C) of EuBr₂. When vacuum evaporation is carried out using, as raw materials, double salt crystals which form (Csₐ,Eu_{b})Brₓ (wherein a+b=x), in the same manner as above, the aforesaid raw materials are heated at a temperature which is at least higher 20°C than the melting point of EuBr₂ in order to form vapor. Therefore, it is preferable that during vaporization, the layer forming rate is preferably at least 20 µm/min., and most preferably at least 60 µm/min..

With respect to dimensions of the vapor-deposited prisms, blocks or needles it has been said in US-A 2006/0065851 that a phosphor layer formed by a gas phase-accumulation method such as the vapor-deposition method, consists of phosphor in the form of columns, wherein the phosphor column has a diameter of some micrometers on average at its top surface. The phosphor column, however, does not always uniformly grow, in that a portion of the phosphor column often grows anomalously, so that neighboring phosphor columns may fuse and combine with each other. Anomalously grown or fused phosphor columns often have a larger diameter at its top surface than a pixel size for reading out a radiation image or than an image size in reproducing the image. This causes a point defect, impairs quality of the reproduced image and, as a result, provides unfavorable effects to various diagnoses and examinations. As has been established therein in radiographic diagnoses, more particularly for chest imaging, the pixel size for reading out a radiation image from the storage panel is generally 100 µm pitch while the image size for reproducing the image is 200 µm pitch. Accordingly, in the case where the storage panel is used for medical diagnoses of chest, the phosphor column having a diameter larger than 200 µm at its top surface are the cause of serious troubles. It has been disclosed that anomalous crystal morphology in form of an aggregate of the phosphor columns fused in the vicinity of their top surfaces, does not form if the evaporation source before vaporized is subjected to a pretreatment in which the whole evaporation source is heated to melt so as to prevent bumping and splashing. The step of preheating the crucible container to melt the whole evaporation source of raw materials is performed under such condition that a temperature of the evaporation source at a center area differs from a temperature of the evaporation source at a peripheral area by not more than 30°C. As a result the object is attained to get a phosphor layer comprising a large number of phosphor columns standing parallel to each other, in which the phosphor columns have a mean diameter in the range of 0.1 to 50 µm at a top surface thereof, and without phosphor columns having a diameter larger than 200 um at the top surface. Therefor in the pretreatment step of that process, the crucible container charged with an evaporation source of raw materials is preferably heated to a temperature higher than the vaporizing temperature at which the evaporation source is vaporized in the evaporation-deposition procedure. So the crucible container is advantageously held for 2 to 20 minutes at the temperature Tp°C, which is higher than the vaporizing temperature and which satisfies the following condition (1): Tₘ+10 < Tp < Tₘ+150 (1) in which Tp is a temperature (°C) at which the evaporation source is subjected to the pretreatment and Tm is a melting point (°C) of the evaporation source. For CsBr, said melting point is 636°C. Further it is taught therein that effectively preventing the stimulated light emission from diffusing, a gap between neighboring phosphor columns, more particularly near the surface of the phosphor layer, is preferably more than 1/3 of the wavelength of the stimulated emission, i.e. in the range of 100 nm to 5 µm. The height of phosphor column, corresponding with the thickness of the phosphor layer generally is in the range of 50 µm to 1,000 µm, and more preferably in the range of 200 to 700 µm. It has been said that the heating using the resistance-heating units may be repeated twice or more to form two or more phosphor layers. After the deposition procedure is complete, the deposited layer may be subjected to heating treatment (i.e., annealing treatment), which is carried out generally at a temperature of 100°C to 300°C for 0.5 to 3 hours, preferably at a temperature of 150°C to 250°C for 0.5 to 2 hours, in an inert gas atmosphere which may contain a small amount of oxygen gas or hydrogen gas.

In US-A 7,053,385 it has been taught that a baffle plate provided between the substrate and the raw material deposition source crucible is desirable to be formed so as to be parallel to the raw materials in the crucible container and the substrate, and to be formed in a shape that the passage suppression in center is large and the passage suppression at sides becomes small in accordance with the volatilization temperature, i.e. the number of holes being small in the center and large at the sides of the baffle. In order to prepare a photostimulable phosphor having a crystallite size of not less than 90 nm, the substrate temperature should not be more than 170°C and the degree of vacuum not more than 0.7 Pa (700 mPa) while introducing a rare-earth element in the evaporation raw materials.

In US-A 7,029,836 it has been established that conditions wherein the panel is manufactured according to vapor deposition should be so that a temperature of the support at a time of the deposition should be controlled to be 50°C to 150°C. At least one photostimulable phosphor layer is formed during simultaneous steps of heating one face of the support and cooling the other face of the support when entering a vapor flow, including photostimulable phosphor raw materials, to the support.

In US-A 2004/0188633 a method for manufacturing a radiographic image conversion panel having a photostimulable phosphor layer on a support has been proposed, comprising the steps of setting a distance between a photostimulable phosphor basic material and a substrate 7 to 60 cm and controlling a temperature of the substrate and evaporating the photostimulable phosphor basic material in a vacuum of 1.0 x 10⁻² Pa with an evaporation speed of 0.5 µm/min or more, in order to form a photostimulable phosphor in the photostimulable phosphor layer by a vapor phase method. Controlling a temperature of the substrate is performed therein by cooling, and that cooling comprises controlling the temperature of the substrate in a range of 10°C to 200°C.

In US-A 2004/0188634 a method for manufacturing a radiographic image conversion panel comprises the steps of heating a photostimulable phosphor raw material at a vacuum degree of 1 x 10⁻² to 1 x 10⁻¹ Pa and a temperature of 400°C to 700°C for 1 to 30 hours, cooling an evaporation source rapidly and further heating the evaporation source cooled.

In US-A 2005/0145808 it has been shown how to suppress occurrence of random image noise like spots caused by random light interference due to coherency of the excitation light and read an image having better image quality with more excellent sharpness than ever before. Therein preferably, the average area S2 of the column crystals is 1x10⁻⁶ to 1×10⁻³ mm² and the average area S1 of the beam of the excitation light is 3x10⁻⁴ to 3x10⁻² mm² . These values of the average area S2 of the column crystals and the average area S1 of the beam of excitation light make it possible that the excitation light excites the column crystals uniformly and that therefore the fluctuation of the intensity of light received as photostimulated light can be suppressed particularly effectively. Preferably, the relative relationship between the average area S2 of the column crystals and the average area S1 of the beam of the excitation light is made 10 x S2 < S1 < 10000 x S2. The average area S2 of the column crystals is affected by the temperature of the support and the vacuum in the apparatus while performing vapor deposition, the surface roughness of the support, the vapor flow incident angle and the like. Therefore, by controlling these, it is possible to produce column crystals having a desired average area. Accordingly, while introducing a vapor flow containing raw material of a photostimulable phosphor onto the surface of the support in order to form the photostimulable phosphor layer, it is preferable to control the temperature of the support by heating or cooling of the surface of the support. Thus, it is possible to control the average area S2 of the column crystals by adjusting the temperature of the whole of the support provided with the photostimulable phosphor layer within a predetermined range and making a deviation from the predetermined range as small as possible. So the temperature is not more than 200°C, preferably not more than 150°C and more preferably within the range of 50°C to 150°C. The deviation of temperature of the support from the predetermined temperature range is preferably within ± 20°C, more preferably ± 10°C and particularly preferably ± 5°C.

In US-A 2005/0258377 it has been established that the thickness of the columnar crystal, i.e., the columnar crystal diameter is affected by the temperature of the support, the degree of vacuum and the incident angle of the vapor stream, so that columnar crystals of a desired thickness can be prepared by controlling these factors. The lower temperature of the support tends to render the crystals thinner but excessively low temperature makes it difficult to maintain the columnar form. The temperature of a support is preferably 100°C to 300°C, and more preferably 150 to 270°C. In cases where the incident angle of the vapor stream is greater than 0°, the columnar crystals become thinner at the greater angle, in which the preferred incident angle is 30° to 80°, and more preferably 30° to 70°. Further, in cases of the incident angle being greater than 0°, the higher vacuum forms thinner columnar crystals, in which the preferred degree of vacuum is not more than 0.0013 Pa. In cases of the incident angle being 0°, the lower degree of vacuum in the low vacuum region forms thinner columnar crystals, in which the preferred degree of vacuum is not more than 0.13 Pa. Furthermore, the columnar crystal diameter ratio (D2/D1) can optimally be controlled by optimally varying the temperature of the support, the degree of vacuum and the incident angle of the vapor stream.

In favor of sharpness, or image definition, in order to enhance a modulation transfer function (MTF) of the stimulable phosphor comprised of columnar crystals, the columnar crystal diameter is preferably 1 to 50 µm, and more preferably 1 to 30 µm. The columnar crystal diameter refers to an average value of diameters of circles equivalent to areas of the section (or so-called circular equivalent diameter of the section) of the columnar crystals when viewed from the side parallel to the support surface. In the invention, the columnar crystal diameter is determined by measuring at least 100 columnar crystals in electron micrographs. Thus, the foregoing columnar crystal diameters D1 and D2 are each an average value of columnar crystal diameters, as defined earlier, which can be determined by electron-microscopic observation of at least 100 columnar crystals. Columnar crystals thinner than 1 µm result in lowered MTF due to scattering of stimulated luminescence by the columnar crystals; on the contrary, columnar crystals thicker than µm result in lowered directionality of stimulated luminescence, and also lowering the MTF. The spacing between respective columnar crystals is preferably not more than 30 µm, and more preferably not more than 5 µm. Spacing exceeding 30 µm lowers the filling ratio of a phosphor of the phosphor layer. The growth angle of inclined columnar crystals of the stimulable phosphor described earlier is more than 0° and not more than 90°, preferably 10° to 70°, and more preferably 20° to 55°. A growth angle of 10° to 70° can be achieved by an incident angle of 20° to 80°, and a growth angle of 20° to 55° can be achieved by an incident angle of 40° to 70°. A greater growth angle results in a columnar crystal excessively inclined toward the support, forming a brittle layer. The thus claimed radiation image conversion panel comprises a support having thereon a stimulable phosphor layer comprising stimulable phosphor crystals having a columnar crystal structure, and said columnar crystal structure has a columnar crystal diameter ratio meeting the equation 1.3.< D2/D1 < 3.0 wherein D2 represents a first columnar crystal diameter on the surface of the stimulable phosphor layer and D1 represents a second columnar crystal diameter at a distance of 0.1 T from the surface of the support toward the surface of the stimulable phosphor layer, in which T represents a thickness of the stimulable phosphor layer. As shown in that patent application, in Table 1, for example, in the preparation process of panel No. 4, the support temperature was changed from 200°C to 160°C and in the preparation process I of panel No. 5, the degree of vacuum was changed from 0.27 to 0.81 Pa. The change time (or timing) was determined based on experimental data which were obtained by observing the crystal growth speed using an electron microscope."

Details about cooling and heating shields or elements for the substrate have been described e.g. in US-Applications 2004/0219289 and 2004/0224084, more particularly in a vapour deposition apparatus adapted for continuous vaporization on a moving substrate, as e.g. attached onto one or more rollers.

In US-Application 2003/0091729, Fig.7 shows a schematic view of a vapour deposition apparatus useful for producing a binderless storage phosphor screen comprising an alkali metal storage phosphor said screen wherein such apparatus comprises a vacuum vessel in which a vapour deposition source is arranged opposite to the substrate, which preferably rotates about an axis and wherein an inert gas, such as argon, which is very much cooler than the vapour temperature of, typically, 650°C to 700°C, for example being at room temperature, can be introduced into the vacuum vessel via a regulating valve, so that the inert gas preferably first impinges on a baffle plate and is not introduced directly into the vapour jet. The inert gas is evacuated again via a vacuum pump, wherein the vacuum pump is set such that a pressure of less than 10 Pa, preferably between 1 Pa and 3 Pa, is produced within the vacuum vessel. If so desired, when the cool gas stream is not sufficient for the cooling of the substrate, it is possible to couple the substrate to an external cooling device.

Apart from data with respect to substrate temperature ranges as given above, and apart from details about vaporization by atomization as by electron beam or resistance heating, no detailed teachings are found about how, where and by means of which tool temperatures at the vapour deposition support are measured, nor is there given any teaching about measured temperature profiles while vapour depositing. It has thus been established that no incentive can be found in order to attain an optimized, reproducible relation between a high speed and a high sharpness when performing manufacturing of radiation image storage phosphor screens or plates, coated with binderless, vapor deposited, needle-shaped CsBr:Eu phosphor layers in a vapour deposition process onto a heated and/or cooled substrate.

### SUMMARY OF THE INVENTION

It is an object of the present invention to provide a method for manufacturing vapor deposited radiation image storage phosphor panels in a reproducible way.

More particularly it is an object to optimize and increase sharpness for a high and reproducible speed level of vapor deposited radiation image storage phosphors in binderless layers of such storage phosphor panels, obtained in a heat-resistant vapor depositing process.

The above-mentioned advantageous effects have been realized by providing a method for manufacturing a radiation image storage phosphor panel by application of specific steps in the preparation method as set out in claim 1. Specific features for preferred embodiments of the invention are set out in the dependent claims.

### DEFINITIONS

Temperatures are expressed in degrees Celsius (°C) as measured on and registered by thermocouples, present at sites as indicated in the text hereinafter. Those temperatures may differ from the real temperature of e.g. a substrate of a panel surface, due to different emission coefficients for radiation heat of each of said substrate and said thermocouples and to influences of the presence of said thermocouples upon temperature measurements, thereby causing an uncertainty with respect to said temperature measurements.

With respect to additional heaters for the substrate, resistive heaters as well as radiation heaters may be applied. Resistive heaters are defined herein as providing invisible infrared radiation, i.e. radiation in the longer wavelength range above 700 nm, whereas radiation heaters in form of lamps are emitting, besides infrared radiation in the longer wavelength range above 700 nm, also visible radiation in the spectral wavelength range below 700 nm.

Shutters are covers of crucibles, closing said crucibles in order to avoid raw materials to evaporate from the said crucibles before, at the inside thereof, a temperature is attained, which is considered as the temperature which allows the start of a continuous evaporation from the crucibles in order to deposit vaporized material onto the substrate or support, present in said vapor depositing apparatus. In addition shutters may be present in form of plates, positioned inbetween said crucibles and said support or substrate. Such additional shutters are removed from the moment that the vapor stream is brought into a condition allowing deposition of a layer of vaporized material onto the support or substrate.

Thermocouples with spring loaded transmitter housings as provided by RODAX, Antwerp, Belgium, were used as described on the web-site www.rodax-europe-com. More particularly use was made of thermocouples of the K-type with NiCr composition, covered with NiAl, according to IEC 584. This high quality thermocouple element with MgO mineral insulated metal sheated cable provides excellent stability and reproducibility, is fully bendable and allows measurements up to 1200°C. Such thermocouples were used for measurements in contact with the support.

In favor of contactless measurements use was made of "micro IRt/c" non-contact temperature sensors, suitable for control of critical thermal processes and for accurate and reliable temperature control, made available by EXERGEN Corp., Watertown, MA, USA.

It has been found now that in a method of manufacturing a radiation image storage phosphor layer on a support layer comprising a vapor depositing step of raw materials of an alkali metal halide salt and a lanthanide dopant salt or a combination thereof in order to ensure vapor deposition of a binderless storage phosphor layer from one or more resistance-heated crucible(s) in a vapor deposition apparatus, wherein one or more shutter(s) are positioned between said crucible(s) and said support, that, at the time said vapor depositing step starts while opening a shutter, a start temperature is measured on and registered by means of a thermocouple, positioned close - i.e., in contact with or contactless at a distance of at most 5 cm - to the side of said support where vapour becomes deposited should be less than 300°C, but not less than 100°C.

Preferred embodiments in the preparation method of phosphor or scintillator panels according to the present invention are as follows:
- said start temperature as measured on and registered by means of a thermocouple, positioned close to the side of said support where vapour becomes deposited, is less than 300°C, but not less than 150°C when additional heating is applied at said support side where vapor becomes deposited;
- said start temperature as measured on and registered by means of a thermocouple, positioned close to the side of said support where vapour becomes deposited, is less than 250°C, but not less than 100°C when additional heating is applied at the side opposite to the side of said support than the side where vapor becomes deposited;
- said additional heating - in form of pre-heating before starting vaporization or while performing vaporization - proceeds by means of resistive heating or radiation heating - i.e. by lamps as e.g. halogen lamps or infrared lamps;
- at the time said vapor depositing step ends by closing a shutter, an end temperature as measured on and registered by means of a thermocouple, positioned close to the side of said support where vapour becomes deposited, is increasing not more than 90°C between starting and ending said vapor depositing step, preferably not more than 70°C and even more preferably not more than 50°C;
- at the time said vapor depositing step ends by closing a shutter, an end temperature as measured on and registered by means of a thermocouple is decreasing between starting and ending said vapor depositing step;
- a small increase or decrease in temperature in the range of less than 50°C is advantageously obtained between starting and ending said vapor depositing step when making use of said additional heating;
- a temperature as measured on and registered by means of a thermocouple is advantageously performed by contactless measuring;
- as an alkali metal halide salt use is made of CsBr and wherein as a lanthanide dopant salt use is made of EuX₂, EuX₃, EuOX or EuX_{z}, wherein 2<z<3;
- as a combination of an alkali metal halide salt and a lanthanide dopant salt use is made of a salt according to the formula CsₓEu_{y}X'_{x+αy} , wherein x/y > 0.25, wherein α ≥ 2 and wherein X' is a halide selected from the group consisting of Cl, Br and I and combinations thereof;
- in said vapor deposition apparatus a pressure is further maintained in the range from 10 to 1 Pa, throughout said vapor deposition process;
- said support comprises a metal support, optionally coated with additional coatings;
- said metal is aluminum or titanium;
- said aluminum support is subjected to an anodizing step followed by a sealing step, wherein said aluminum support is treated with a solution containing a chromium compound in at least one of said steps;
- as an additional coating a precoat layer is optionally present, comprising an organic polymer;
- as an additional coating a sublayer is optionally present, comprising an inorganic compound.
   Further advantages and particular embodiments of the present invention will become apparent from the following description, without however limiting the invention thereto.

### DETAILED DESCRIPTION OF THE INVENTION

According to the present invention a method of manufacturing a radiation image storage phosphor layer on a support layer is provided wherein said method comprises a vapor depositing step of raw materials of an alkali metal halide salt and a lanthanide dopant salt or a combination thereof in order to ensure vapor deposition of a binderless storage phosphor layer from one or more resistance-heated crucible(s) in a vapor deposition apparatus, wherein one or more shutter(s) are positioned on, and, optionally, between said crucible(s) and said support, wherein said method is characterised in that, at the time said vapor depositing step starts while opening a shutter, a start temperature is measured on and registered by means of a thermocouple, positioned close to the support at the side of said support where vapour becomes deposited, of less than 300°C, but not less than 100°C.

In a particular embodiment in the preparation method of phosphor or scintillator panels according to the present invention said start temperature as measured on and registered by means of a thermocouple, positioned close to the side of said support where vapour becomes deposited, at the support side where vapor becomes deposited, is less than 300°C, but not less than 150°C. In another particular embodiment said start temperature as measured on and registered by means of a thermocouple, positioned close to the side of said support where vapour becomes deposited, is less than 250°C, but not less than 100°C.

In the method according to the present invention, said additional heating proceeds by means of resistive heating or radiation heating. Said additional heating - in form of pre-heating before starting vaporization or while performing vaporization - thus proceeds by means of electrically resistive heating or radiation heating - i.e. by lamps as e.g. halogen lamps or infrared lamps. Radiation heating by lamps before and/or during vaporization usually proceeds at the side of the support or substrate, where vapor deposits, before and/or during vaporization by lamps positioned next to the crucible(s), preferably at positions surrounding the crucible(s) or between the crucible(s) and the support, just outside the space of the vapor stream or cloud. Otherwise resistive heating is usually performed at the back side of the support, wherein the resistive heaters are positioned so that they cannot be hit by the vapor stream escaping from the crucible(s) and passing along the substrate so that no deposition onto the substrate or the resistive heaters occurs. It is however not excluded to depart from these particular arrangements and to have an opposite arrangement, or that use is exclusively made use from radiation heaters or resistive heaters.

According to the present invention, at the time said vapor depositing step ends by closing a shutter, an end temperature as measured on and registered by means of a thermocouple is increasing not more than 90°C between starting and ending said vapor depositing step, more particularly not more than 70°C and even more particularly not more than 50°C.

In another embodiment according to the method of the present invention at the time said vapor depositing step ends by closing a shutter, an end temperature as measured on and registered by means of a thermocouple, positioned close to the side of said support where vapour becomes deposited, is decreasing between starting and ending said vapor depositing step. A decrease of not more than 50°C is recommended, although said decrease is not particularly limited thereto.

In still another embodiment according to the method of the present invention a small increase or decrease in temperature in the range of less than 50°C is obtained between starting and ending said vapor depositing step when making use of said additional heating.

In a further embodiment according to the method of the present invention, a temperature as measured on and registered by means of a thermocouple is performed by contactless measuring.

As an alkali metal halide salt, according to the method of the present invention use is made of CsBr and wherein as a lanthanide dopant salt use is made of EuX₂, EuX₃, EuOX or - as a mixed salt with divalent and trivalent europium - EuX_{z}, wherein 2<z<3.

In another embodiment as a combination of an alkali metal halide salt and a lanthanide dopant salt, according to the method of the present invention, use is made of a salt according to the formula CsₓEu_{y}X'_{x+αy}, wherein x/y > 0.25, wherein α ≥ 2 and wherein X' is a halide selected from the group consisting of Cl, Br and I and combinations thereof.

In said vapor deposition apparatus, according to the method of the present invention, a pressure is further maintained in the range from 10⁻⁵ to 1 Pa, throughout said vapor deposition process.

A phosphor panel of the present invention comprises a support that can be any support known in the art, but in view of the desired high humidity resistance of the screens, a support with very low water vapour permeability is preferably used: any solid of an organic or inorganic nature, which can moreover assume any geometrical shape, such as foils, fibers (e.g. carbon fiber reinforced resin sheets and more particularly sheets, each of which includes carbon fibers arranged in a direction and impregnated with a heat resistant resin such that directions of the carbon fibers in the carbon fiber reinforced resin sheets are different from each other), and particles can be used. Particular organic supports may be chosen from a polyimide sheet, epoxy compounds, thermoplastic and thermosetting compounds of different compositions, polyether, polyester and polycarbonate compositions, without however being limited thereto. As an inorganic non-metallic support chemically reinforced glass or crystallised glass can be used. Inorganic metallic supports, suitable for use are, e.g. metal substrates such as those of aluminum, titanium, lead, iron, copper, steel, molybdenum, beryllium; supports of metallic and non-metallic oxides such as those of aluminum, titanium, lead, copper, beryllium, manganese, tungsten, vanadium, and silicon oxides. It is recommended to subject the support to cleaning procedures as to washing and degreasing before applying a protective layer unit and/or a phosphor deposit thereupon. A preferred support is a support of anodised aluminium and the supports as disclosed in US-A 6,815,095 and US-Application 2003/0134087.

According to the method of the present invention, said support thus comprises a metal support, optionally coated with additional coatings.

More particularly said metal support, according to the method of the present invention, is aluminum or titanium. A support layer in form of a titanium sheet or an alloy thereof, or a support comprising a titanium layer or a titanium alloy layer may be applied as has e.g. been proposed as a particularly suitable support with respect to corrosion resistance in EP-Application No. 06 114 366, filed May 23, 2006.

In case of an aluminum support, according to the method of the present invention, said aluminum support may be subjected to an anodizing step, followed by a sealing step, wherein said aluminum support is treated with a solution containing a chromium compound in at least one of said steps, e.g. as has been described in EP-Applications Nos. 06 112 797 and 06 112 798, both filed April 20, 2006. A radiation image storage phosphor panel having as a layer arrangement of consecutive layers an anodized aluminum support layer, a phosphor layer comprising needle-shaped phosphor crystals, and a protective layer, may be manufactured, wherein said anodized aluminum support layer has a ratio of average surface roughness 'Rₐ' versus anodized layer thickness 't' in the range from 6:1000 to 6:10, in favour of less corrosion and acceptable adhesion between support layer and storage phosphor. Such a radiation image storage phosphor panel advantageously has an aluminum support layer, which is, in a first preparation step, treated by an anodizing and a sealing step, and is treated with a chromium compound in at least one of said steps.

In another embodiment as an additional coating a sublayer is optionally present, comprising an inorganic compound, e.g. as the one described in EP-Application No. 06 112 800, filed April 20, 2006. In favour of lowering corrosion of a radiation image storage phosphor panel comprising, as a layer arrangement of consecutive layers, an anodized aluminium support, a sublayer and a phosphor layer having needle-shaped phosphor crystals may be built, wherein said sublayer comprises an inorganic metal oxide or a metal compound and wherein said sublayer has a thickness of less than 20 µm. Apart from the fact that said metal is selected from the group consisting of tin, copper, nickel, chromium, scandium, yttrium, tantalum, vanadium, titanium, niobium, cobalt, zirconium, molybdene and tungsten, said aluminum support advantageously contains magnesium.

According to the method of the present invention, as an additional coating a precoat layer is optionally present, comprising an organic polymer, e.g. as has been described in EP-Application No. 06 112 799, filed April 20, 2006. As thaught therein in favour of adhesion, and applicable in the present invention, a radiation image storage phosphor panel comprises as an arrangement of layers, in consecutive order, an anodized aluminum support, a precoat layer and a phosphor layer comprising needle-shaped phosphor crystals, wherein said precoat layer comprises an organic polymer, and wherein said precoat layer has a thickness of less than 20 µm. Apart from use of a poly-p-xylylene as an organic polymer, said polymer is selected from the group consisting of cellyte, poly-acrylate, poly-methylmethacrylate, poly-methylacrylate, polystyrene, polystyrene-acrylonitrile, polyurethane, hexafunctional polyacrylate, polyvinylidene-difluoride, silane-based polymers and epoxy functionalized polymers.

Coated upon a support layer, as an intermediate layer between support and phosphor layer a parylene layer as disclosed in US-A 2004/0051441 and US-A 2004/0051438 or another, e.g. dye-containing layer as in US-A 6,927,404 may be recommended, wherein such a parylene layer may also be present between phosphor layer and outermost protective layer or topcoat as in US-A 6,710,356 or as described in US-A 6,822,243. A good adhesion between the two protective layers is advantageously provided when use is made of a phosphoric acid ester compound as disclosed in US-A 2005/0067584. The parylene layers mentioned above are particularly recommended to be applied as layers protecting the doped alkali metal halide phosphor from moisture, as is such phosphors are known to be very sensitive to humidity of the environment. In the case wherein between the support material and the phosphor layer a parylene layer is present, the surface roughness of the covered support shows a better smoothness its surface roughness decreases (preferably 0.5 or less and even more preferably 0.1 or less), as described in US-A 2004/0051438 which may be in favour of depositing columnar crystals or needles having smaller diameters, thereby leading to an improved packing density of the said needles per square unit of the surface area of the vapour deposited photostimulable phosphor layer and improved sharpness or image definition. Dimensions of such columnar, needle-shaped or cylindrical phosphors as disclosed in USA 6,967,339 may advantageously be strived at.

In favour of a good adhesion between support and phosphor layer measures may, in another embodiment, be taken as proposed in EP-Application No. 06 101 437, filed February 9, 2006, wherein a sublayer in form of a binderless non-vapour deposited layer, at least comprising a halide compound, is providing good adhesiveness.

In a particular embodiment of the present invention the surface of the phosphor layer may be smaller than the surface of the support so that the phosphor layer does not reach the edges of the support. Thus a panel with a support having a surface larger than the main surface of the phosphor layer, so that the phosphor layer leaves a portion of the support free, wherein the protective layer comprising layer A and topcoat layer B may cover at least in part the portion of the support left free by the phosphor layer. An advantage of such a construction resides in the fact that the edges of the phosphor layer do not touch mechanical parts of the apparatus and are thus less easily damaged during use of the panel, more particularly e.g. during transport in the scanner. Another advantage of this construction is that no special edge reinforcement is necessary, although, if desired, further edge reinforcement may be applied. Although a construction of a phosphor panel wherein the surface of the phosphor layer is smaller than the surface of the support, so that the phosphor layer does not reach the edges of the support, represents a specific embodiment of the present invention, such a construction can be beneficial for the manufacture of any phosphor panel covered with any protective layer known in the art.

In favour of repetitive cleaning of storage panels and in order to avoid scratches while handling a storage phosphor plate, measures may be taken as proposed in EP-Applications Nos. 06 118 157 and 06 118 158, filed July 31, 2006. As in these applications a protective coating having a photo- or electron beam curable composition may be applied, wherein said composition comprises a polymer or copolymer and a (meth)acrylate type monomer having more than one (meth)acrylate group per monomer molecule and at least one ethyleneoxy group per (meth)acrylate group in said monomer has been proposed therein. Such top-coat layer for a photostimulable phosphor screen comprising a support, a storage phosphor layer and an outermost top-coat, is more particularly suitable for use in favor or repeated cleanability when such a top-coat layer comprises a cellulose ester polymer. Otherwise a photo-curable composition comprising a polymer or copolymer and a (meth)acrylate type monomer with more than one (meth)acrylate group per monomer molecule and two or more ethyleneoxy groups per (meth)acrylate group in said monomer may be suitable for use as a topcoat layer for storage phosphor screens or panels, more particularly when said polymer is polymethyl methacrylate or a copolymer thereof, thereby avoiding scratches. When a storage phosphor screen with a topcoat layer has protruding beads it is important that the beads do not touch mechanical parts of the scanner and that this is true even when the storage panel shows some wobble during transport in the scanner. Therefore beads when used as spacing particles in a storage phosphor screen of the present invention preferably have a median volume diameter, dᵥ₅₀, so that 0.5 µm ≤ dv50 ≤ 25 µm and a median numeric diameter, dₙ₅₀, so that 0.1 ≤ dᵥ₅₀/dₙ₅₀ ≤ 1.20. Further the beads are preferably adapted to the thickness, t, of the layer B on the storage panel of the present invention so that said polymeric beads have a median volume diameter, dᵥ₅₀, wherein 0.25 ≤ dᵥ₅₀/t ≤ 4.0.

While the present invention will hereinafter in the examples be described in connection with preferred embodiments thereof, it will be understood that it is not intended to limit the invention to those embodiments.

### Examples

CsBr:Eu photostimulable phosphor screens were prepared by a vapour deposition process, on flexible chromium sealed anodized aluminum plates, in a vacuum chamber by means of a resistive heating of crucibles, having as starting materials a mixture of CsBr and EuOBr as raw materials.

Said deposition process onto said flexible anodised aluminum supports was performed in such a way that said support was rotating over the vapour stream.
Two refractory trays or boats - one placed on the left side, the other on the right side, were used, in which 330 g of a mixture of CsBr and EuOBr as raw materials in a 99.5%/0.5% CsBr/EuOBr percentage ratio by weight were present as raw materials in each of said crucibles in order to become vaporized.
As crucibles an elongated boat having a length of 100 mm was used, having a width of 35 mm and a side wall height of 50 mm composed of "tantalum" having a thickness of 0.5 mm, composed of 3 integrated parts: a crucible container, a "second" plate with slits and small openings and a cover with slit outlet. The longitudinal parts were fold from one continuous tantalum base plate in order to overcome leakage and the head parts are welded. Said second plate was mounted internally in the crucible at a distance from the outermost cover plate which was less than 2/3 of said side wall height of 45 mm. Under vacuum pressure (a pressure of 2 x 10⁻¹ Pa equivalent with 2 x 10⁻³ mbar) maintained by a continuous inlet of argon gas into the vacuum chamber, and at a sufficiently high temperature of the vapour source (760°C) the obtained vapour was directed towards the moving sheet support and was deposited thereupon successively while said support was rotating over the vapour stream. Said temperature of the vapour source was measured by means of thermocouples present outside and pressed under the bottom of said crucible and by tantalum protected thermocouples present in the crucible. Before starting evaporation in the vapour deposition apparatus, while heating the raw mixture in the boat or crucible and to make them ready for evaporation, shutters are covering the boats, trays or crucibles.
The chromium sealed anodized aluminum support having a thickness of 800 µm, a width of 18 cm and a length of 24 cm, was covered with a parylene C precoat at the side whereupon the phosphor should be deposited, positioned at a distance - measured perpendicularly - of 22 cm between substrate and crucible vapour outlet slit.
Plates were taken out of the vapour deposition apparatus after having run same vapour deposition times, leading to phosphor plates having phosphor layers of about equal thicknesses.
In another experiment (see CB74120) only one crucible was used, having as dimensions a length of 130 mm, a width of 45 mm and a side wall height of 60 mm. The said crucible was filled with 600 g of a mixture of CsBr and EuOBr as raw materials in a 99.5%/0.5% CsBr/EuOBr percentage ratio by weight.

In the Table 1 hereinafter it has been indicated where, if applied, an additional heating was performed: in some experiments additional heating in form of a pre-heating step was applied at the back side of the support (by resistive heating in these particular experiments) where no vapour was deposited while evaporating the raw materials; in another experiment additional heating in form of a pre-heating step was applied at the phosphor side of the support (by radiation heating with halogen lamps in this particular experiment) where vapour was deposited while evaporating the raw materials.
- "T_{tcKS} shutter" represents the starting temperature measured at the front side of the support plate - i.e. where raw materials should be deposited while performing evaporation - on and registered by means of a thermocouple type K from RODAX, Antwerp, Belgium, before opening the shutter present on the crucible positioned on the left or right side in the vapour deposition apparatus.
- "T_{tcKevap}" represents the temperature as measured at the front side of the support plate - i.e. where raw materials should be deposited while performing evaporation - on and registered by means of a thermocouple while evaporation continuously proceeds with opened shutters.
- "T_{tcKend}" represents the temperature as measured at the front side of the support plate - i.e. where raw materials should be deposited while performing evaporation - on and registered by means of a thermocouple, when a crucible is exhausted and covered with the shutter again (end of vaporization).

Values of temperature differences between starting temperature T_{tcKs} shutter and end temperature Tt_{cKend} as defined hereinbefore have been calculated and added to the Table 1 as ΔT.
All of the temperatures T or differences in temperatures ΔT have been represented in °C.

**Table 1**

| Plate No. | Extra heating at | T_{tcKs}* shutter left | T_{tcKevap}* left | T_{tcKend}* left | ΔT* (°C) |
|---|---|---|---|---|---|
| CB74113 | Back side | 180 | 221 | 226 | 46 |
| CB74114 | Back side | 171 | 216 | 219 | 48 |
| CB74115 | Back side | 164 | 210 | 227 | 63 |
| CB74118 | Back side | 175 | 222 | 231 | 56 |
| CB74120 | No heating | -- | -- | -- | -- |
| CB74312 | Phosphor side | 243 | 225 | 215 | -28 |

| Plate No. | | T_{tcKs}* shutter right | T_{tcKevap}* right | Tt_{cKend}* right | ΔT* (°C) |
|---|---|---|---|---|---|
| CB74113 | Back side | 174 | 214 | 225 | 51 |
| CB74114 | Back side | 161 | 210 | 227 | 66 |
| CB74115 | Back side | 165 | 210 | 224 | 59 |
| CB74118 | Back side | 168 | 218 | 232 | 64 |
| CB74120 | No heating | 158 | 221 | 248 | 90 |
| CB74312 | Phosphor side | 231 | 217 | 210 | -21 |

| | | | | | |
|---|---|---|---|---|---|
| *determined at the front side, where vapour becomes deposited, i.e. where vaporized raw materials become deposited, thereby forming a binderless phosphor layer | | | | | |

From all of the data summarized in the Table 1 hereinbefore, it becomes clear that the thermocouple temperature before starting evaporation (i.e. with closed shutters) as measured at the front side of the support where vapour becomes deposited onto said support, is in the range between 100°C and 300°C. End temperatures exceeding starting temperatures with more than 90°C (see "ΔT" values) are detrimental with respect to image sharpness as is reflected by MTF-values at 1 line pair and 3 line pairs per mm respectively: CB74120, prepared from one large crucible represents a panel that leads to results with respect thereto that are just acceptable, whereas differences of less than 90°C, i.e. even less than 70°C, lead to plates having high speed and better image sharpness as becomes clear from the results, summarized in Table 2 hereinafter.
Data about coating weight of the phosphor layer, MTF-values at 1 1p/mm and 3 lp/mm indicative for sharpness, and relative speed as well as absolute speed obtained after correction for the phosphor coating weight have been set out in the Table 2 hereinafter, wherein a relative speed (SAL%) is defined as speed for each of the screens, derived from Scan Average Levels, compared with the speed as derived from said "Scan Average Levels" of an MD10^{®} reference photostimulable phosphor screen manufactured by Agfa-Gevaert, Mortsel, Belgium.

**Table 2**

| Plate No. | Coating weight (mg/cm²) | SAL_rel. (%) | SAL_corr.abs (%) | MTF 1 lp/mm | MTF 3 lp/mm |
|---|---|---|---|---|---|
| CB74113 | 189.06 | 609 | 600 | 0.672 | 0.215 |
| CB74114 | 182.66 | 559 | 558 | 0.685 | 0.236 |
| CB74115 | 178.04 | 649 | 654 | 0.693 | 0.226 |
| CB74118 | 192.03 | 763 | 748 | 0.694 | 0.214 |
| CB74120 | 178.69 | 653 | 658 | 0.652 | 0.183 |
| CB74312 | 155.32 | 516 | 550 | 0.732 | 0.250 |

CB74120, although offering still about acceptable results - see e.g. its high speed - expressed as SAL_rel., and, after correction expressed as SAL_corr.abs (corrected for phosphor coating weight) wherein a higher figure stands for higher speed, tends to a decrease in sharpness (higher MTF-values stand for sharper images) versus CB-plates 74113, 74114, 74115, 74118 and 74312.

As an effect of the present invention it has been established that, in the conditions within a temperature range of less than 300°C, but not less than 100°C, measured on and registered by means of a thermocouple positioned close to the side of the support where vaporized raw materials become deposited as set forth above in the description and in the examples, while starting vaporization by opening the shutters of crucibles in a resistive heating evaporation process, that an optimized speed and sharpness is measured for the storage phosphor plate thus obtained. This effect as envisaged becomes realized the more when at the end of the vaporization process an increase of not more than 90°C or a decrease has been measured on and registered by said thermocouple, positioned close to the same side of said support where vapour becomes deposited.

Having described in detail preferred embodiments of the current invention, it will now be apparent to those skilled in the art that numerous modifications can be made therein without departing from the scope of the invention as defined in the appending claims.

## Claims

1. A method of manufacturing a radiation image storage phosphor layer on a support or substrate, said method comprising a vapor depositing step of raw materials of an alkali metal halide salt and a lanthanide dopant salt or a combination thereof in order to ensure vapor deposition of a binderless storage phosphor layer from one or more resistance-heated crucible(s) in a vapor deposition apparatus, wherein one or more shutter(s) are positioned between said crucible(s) and said support or substrate, **characterised in that**, at the time said vapor depositing step starts while opening a shutter, a start temperature is measured on and registered by means of a thermocouple, positioned close to the support at the side of said support where vapour becomes deposited, of less than 300°C, but not less than 100°C.

2. Method according to claim 1, wherein said start temperature as measured on and registered by means of a thermocouple, positioned close to the side of said support where vapour becomes deposited, is less than 300°C, but not less than 150°C when additional heating is applied at said support side where vapor becomes deposited.

3. Method according to claim 1, wherein said start temperature as measured on and registered by means of a thermocouple, positioned close to the side of said support where vapour becomes deposited, is less than 250°C, but not less than 100°C when additional heating is applied at the side of said support, opposite to the side where vapour becomes deposited.

4. Method according to claim 2 or 3, wherein said additional heating proceeds by means of resistive heating or radiation heating.

5. Method according to any one of the claims 1 to 4, wherein at the time said vapour depositing step ends by closing a shutter, an end temperature as measured on and registered by means of a thermocouple, positioned close to the side of said support where vapour becomes deposited, is increasing not more than 90°C between starting and ending said vapour depositing step.

6. Method according to any one of the claims 1 to 4, wherein at the time said vapor depositing step ends by closing a shutter, an end temperature as measured on and registered by means of a thermocouple, positioned close to the side of said support where vapour becomes deposited, is increasing not more than 70°C between starting and ending said vapor depositing step.

7. Method according to any one of the claims 1 to 4, wherein at the time said vapor depositing step ends by closing a shutter, an end temperature as measured on and registered by means of a thermocouple is increasing not more than 50°C between starting and ending said vapor depositing step.

8. Method according to any one of the claims 1 to 4, wherein at the time said vapor depositing step ends by closing a shutter, an end temperature as measured on and registered by means of a thermocouple is decreasing between starting and ending said vapor depositing step.

9. Method according to any one of the claims 1 to 8, wherein a small increase or decrease in temperature in the range of less than 50°C is obtained between starting and ending said vapor depositing step when making use of said additional heating.

10. Method according to any one of the claims 1 to 9, wherein a temperature as measured on and registered by means of a thermocouple is performed by contactless measuring.

11. Method according to any one of the claims 1 to 10, wherein as an alkali metal halide salt use is made of CsBr and wherein as a lanthanide dopant salt use is made of EuX₂, EuX₃, EuOX or EuX_{z}, wherein 2 < z < 3.

12. Method according to any one of the claims 1 to 10, wherein as a combination of an alkali metal halide salt and a lanthanide dopant salt use is made of a salt according to the formula CsₓEuyX'ₓ+ₐy , wherein x/y > 0.25, wherein a > 2 and wherein X' is a halide selected from the group consisting of Cl, Br and I and combinations thereof.

13. Method according to any one of the claims 1 to 12, wherein in said vapor deposition apparatus a pressure is maintained in the range from 10⁻⁵ to 1 Pa, throughout said vapor deposition process.

14. Method according to any one of the claims 1 to 13, wherein said support comprises a metal support, optionally coated with additional coatings.

15. Method according to claim 14, wherein said metal is aluminum or titanium.

16. Method according to claim 15, wherein said aluminum support is subjected to an anodizing step followed by a sealing step, wherein said aluminum support is treated with a solution containing a chromium compound in at least one of said steps.

17. Method according to any one of the claims 14 to 16, wherein as an additional coating a precoat layer is present, comprising an organic polymer.

18. Method according to any one of the claims 14 to 16, wherein as an additional coating a sublayer is present, comprising an inorganic compound.

## Amended claims

### Amended claims in accordance with Rule 137(2) EPC.

**1.** A method of manufacturing a radiation image storage phosphor layer on a support or substrate, said method comprising a vapor depositing step of raw materials of an alkali metal halide salt and a lanthanide dopant salt or a combination thereof in order to ensure vapor deposition of a binderless storage phosphor layer from one or more resistance-heated crucible(s) in a vapor deposition apparatus, wherein one or more shutter(s) are positioned between said crucible(s) and said support or substrate, **characterised in that**, at the time said vapor depositing step starts while opening a shutter, a start temperature is measured on and registered by means of a thermocouple, positioned close to the support at the side of said support where vapour becomes deposited, of less than 300°C, but not less than 100°C, and wherein at the time said vapour depositing step ends by closing a shutter, an end temperature as measured on and registered by means of a thermocouple, positioned close to the side of said support where vapour becomes deposited, is increasing not more than 90°C between starting and ending said vapour depositing step.

**2.** Method according to claim 1, wherein said start temperature as measured on and registered by means of a thermocouple, positioned close to the side of said support where vapour becomes deposited, is less than 300°C, but not less than 150°C when additional heating is applied at said support side where vapor becomes deposited.

**3.** Method according to claim 1, wherein said start temperature as measured on and registered by means of a thermocouple, positioned close to the side of said support where vapour becomes deposited, is less than 250°C, but not less than 100°C when additional heating is applied at the side of said support, opposite to the side where vapour becomes deposited.

**4.** Method according to claim 2 or 3, wherein said additional heating proceeds by means of resistive heating or radiation heating.

**5.** Method according to any one of the claims 1 to 4, wherein at the time said vapor depositing step ends by closing a shutter, an end temperature as measured on and registered by means of a thermocouple, positioned close to the side of said support where vapour becomes deposited, is increasing not more than 70°C between starting and ending said vapor depositing step.

**6.** Method according to any one of the claims 1 to 4, wherein at the time said vapor depositing step ends by closing a shutter, an end temperature as measured on and registered by means of a thermocouple is increasing not more than 50°C between starting and ending said vapor depositing step.

**7.** Method according to any one of the claims 1 to 4, wherein at the time said vapor depositing step ends by closing a shutter, an end temperature as measured on and registered by means of a thermocouple is decreasing between starting and ending said vapor depositing step.

**8.** Method according to any one of the claims 1 to 7, wherein a small increase or decrease in temperature in the range of less than 50°C is obtained between starting and ending said vapor depositing step when making use of said additional heating.

**9.** Method according to any one of the claims 1 to 8, wherein a temperature as measured on and registered by means of a thermocouple is performed by contactless measuring.

**10.** Method according to any one of the claims 1 to 9, wherein as an alkali metal halide salt use is made of CsBr and wherein as a lanthanide dopant salt use is made of EuX₂, EuX₃, EuOX or EuX_{z}, wherein 2 < z < 3.

**11.** Method according to any one of the claims 1 to 9, wherein as a combination of an alkali metal halide salt and a lanthanide dopant salt use is made of a salt according to the formula CsₓEu_{Y}X'_{x+αy}, wherein x/y > 0.25, wherein α ≥ 2 and wherein X' is a halide selected from the group consisting of Cl, Br and I and combinations thereof.

**12.** Method according to any one of the claims 1 to 11, wherein in said vapor deposition apparatus a pressure is maintained in the range from 10⁻⁵ to 1 Pa, throughout said vapor deposition process.
